(19) Europäisches Patentamt

European Patent Office

Office européen des brevets

(11) **EP 2 621 287 B1**

(12) **EUROPEAN PATENT SPECIFICATION**

(45) Date of publication and mention
of the grant of the patent:
**08.04.2015 Bulletin 2015/15**

(21) Application number: **11754354.6**

(22) Date of filing: **01.09.2011**

(51) Int Cl.:
*A23G 1/00* (2006.01)    *A23G 1/36* (2006.01)
*A23G 1/52* (2006.01)

(86) International application number:
**PCT/EP2011/065095**

(87) International publication number:
**WO 2012/041629 (05.04.2012 Gazette 2012/14)**

(54) **AERATED CHOCOLATE COMPOSITION AND PREPARATION THEREOF**

LUFTDURCHSETZTE SCHOKOLADENZUSAMMENSETZUNG UND IHRE ZUBEREITUNG

COMPOSITION DE CHOCOLAT AÉRÉ ET PRÉPARATION CORRESPONDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2010 EP 10183816**

(43) Date of publication of application:
**07.08.2013 Bulletin 2013/32**

(73) Proprietors:
• **Unilever PLC**
**London, Greater London EC4Y 0DY (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventors:
• **WILLIAMS, Andrea**
**Bedford Bedfordshire MK44 1LQ (GB)**
• **XU, Qingguo**
**Baltimore**
**Maryland 21210 (US)**
• **ZHU, Shiping**
**Bedford Bedfordshire MK44 1LQ (GB)**

(74) Representative: **Warner, Guy Jonathan**
**Unilver PLC**
**Unilever Patent Group**
**Colworth House**
**Sharnbrook**
**Bedford, Bedfordshire MK44 1LQ (GB)**

(56) References cited:
**JP-B- 6 087 742**

• **ANONYMOUS: "Physical properties of sugar
esters", INTERNET CITATION, 27 December 2001
(2001-12-27), pages 1-3, XP002557667, Retrieved
from the Internet: URL:http:
//web.archive.org/web/20011227201 552/http:
//www.mfc.co.jp/englis h/physical.htm [retrieved
on 2009-11-26]**
• **DAVID KILKAST AND STUART CLEGG: "Sensory
perception of creaminess and its relationship
with food structure", FOOD QUALITY AND
PREFERENCE, 24 October 2002 (2002-10-24),
XP002629988, DOI: http://dx.doi.org/
10.1016/S0950-3293(02)00 074-5**
• **Bianca A.P. Nelen and Julian M. Cooper:
"Sucrose esters"; "6" In: "Emulsifiers in Food
Technology", 2004, Blackwell Publishing Ltd,
XP002629989, pages 131-161, paragraph [6.8.2.2]**

## Description

This invention relates to an aerated chocolate composition and preparation thereof, in particular a stable chocolate foam composition and preparation thereof.

## Background of the invention

The pleasant flavour and superior texture are the two major characteristics of chocolate. Chocolate must be solid in room temperature, and yet melt rapidly in the mouth at 37 oC to give the smooth mouth feeling. Dark chocolate, milk chocolate and white chocolate are the three major flavours.

Chocolate is often used as a coating in the food industry. Tthe inventors have investigated means for reducing the calorific value of the chocolate but without reducing the sensory experience provided by the chocolate coating.

Aerated or foamed chocolate are well known products on the market. Examples are Nestle aero, and Mars Skye bar. The main methods for the manufacturing of aerated chocolate are that (1) gas is mixed thereinto by dissolving or under high pressure followed by solidification of the chocolate and then the quickly released gas cells can be locked in the solid chocolate matrix ; (2) The molten chocolate is continuously stirred to foam followed by cooling, so called whipped chocolate (EP 1 166 639 A1).

JP6087742 (FUJI OIL LTD, 09-11-1994) discloses an aerated chocolate composition having an overrun of 100% wherein the aerated chocolate composition contains 0.05-3,00% (w/w), of at least one sucrose ester having an HLB value of not more than 3.

In the first method, the gases such as air or carbon dioxide, can be dissolved in molten chocolate under high pressure with or without the help of stirring. After de-pressurisation, the dissolved gas will come out to form gas cells in the chocolate, and these gas cells will be locked in the chocolate matrix if the temperature is quickly cooled down below the melting temperature of chocolate during the de-pressurisation process. The solidified chocolate will keep the gas cells and stabilised the prepared chocolate foam. However, the gas cells are normally big and the aeration is not easy to control. If the chocolate is above its melting temperature, the chocolate foam is not stable and thus the coating, dipping and rolling which are common for chocolate application, can not be applied to the chocolate foam prepared by this method.

In the second method, molten chocolate is stirred to foam and normally extra emulsifiers and shortenings will be required.

It has now been found that it is possible to aerate chocolate under certain conditions by carefully selecting emulsifiers and aeration conditions. Moreover, the aeration characteristics remain largely untouched if the chocolate is later melted and resolidified.

It has now been found that certain sucrose esters can aerate chocolate at temperature above 40°C. The resulting aerated chocolate can stay stable at temperatures where the chocolate is molten. The prepared chocolate foams have naked-eye invisible bubbles, which can add extra benefits to the texture, mouth-feeling, calorific reduction et al. They also should exceptionally good stability upon melting and re-solidifying

## Tests and definitions

### Sucrose esters

Sucrose esters of fatty acids can be obtained by esterifying one or more of the hydroxyl group of a sucrose molecule with fatty acids. The fatty acids react with one or more hydroxyl groups to form mono, di, tri or multi-fatty acid ester, or mixture thereof. Preferably the sucrose ester emulsifier comprises a mixed ester or homo-ester. The fatty acid is preferably selected from the group consisting of lauric acid, myristic acid, palmitic acid, stearic acid and mixtures thereof.

The sucrose esters including L-195 (sucrose laurate), S070 (sucrose stearate), S-170, S270, S370, S570, S770, S970, S1670, P170 (sucrose palmitate), 0170 (sucrose oleate) and B370 (sucrose behenate), et al. were obtained from Mitsubishi-Kagaku Foods Corporation, Tokyo, Japan. SP10 and SP50 from Cisterna were also used.

### Chocolate

By the term "chocolate" is meant dark chocolate, milk chocolate, white chocolate, flavoured chocolate, couverture chocolate, compound chocolate (which is made from a combination of cocoa solids, non-cocoa butter vegetable fat and sweeteners) and mixtures thereof. The chocolate may also comprise inclusions such as nuts or pieces thereof, dried fruit, such as raisins, or pieces thereof, biscuit and mixtures thereof. The chocolate must, however, remain substantially anhydrous. By the term "substantially anhydrous" is meant comprising no more than 5%, preferably no more than 3%, more preferably no more than 1% w/w water.

## HLB value

The HLB value is given by the equation HLB = $20 \cdot M_h/M$, where $M_h$ is the molecular mass of the hydrophilic part of the molecule and M is the molecular mass of the whole molecule thus giving a value on an arbitrary scale of 0 to 20. For fatty acid esters, HLB = 20 (1-S/A) where
S = Saponification value
A = Acid number of the fatty acid
Therefore an HLB value of 0 corresponds to a completely hydrophobic molecule and an HLB value of 20 corresponds to a completely hydrophilic molecule. Typical HLB values are:

| | |
|---|---|
| 0 to 3 | an anti-foaming agent |
| 4 to 6 | a water-in-oil emulsifier |
| 7 to 9 | a wetting agent |
| 8 to 18 | an oil-in-water emulsifier |
| 13 to 15 | a detergent |
| 10 to 18 | a solubiliser or a hydrotrope |

## Overrun

"Overrun" is a measure of aeration commonly used in the ice cream industry and is defined in percentage terms as follows:

$$\text{Overrun} = (\text{Weight difference before and after aeration} / \text{weight after aeration}) \times 100$$

wherein the sample weight both before and after aeration is for the same given fixed volume.

## Optical microscopy

Optical microscopy was used to measure the bubble morphology in the aerated chocolate. The samples were placed on a glass slide and covered with a cover slip. The optical images were taken on a Polyvar microscope (Reichert-Jung Limited). For the morphological study of foams, a 200 $\mu$m spacer was used between the slide and cover slip to protect the bubble from deformation.

## Scanning electron microscopy

Aerated chocolates were prepared for cryo-scanning electron microscopy by cooling it immediately after preparation to 50 degrees centigrade and placing it on a 10mm diameter aluminium sample holder drilled with a 5mm diameter depression. The sample holder was then immediately plunged into nitrogen slush, transferred to a Gatan Alto 2500 low temperature preparation chamber and warmed to -90 degrees centigrade for fracture and coating with 2nm Au/Pd. The coated sample was then transferred to a Jeol 6301F field emission scanning electron microscope fitted with a Gatan cold stage and examined at -150 degrees centigrade. Images were obtained at 5kV.

## Stability of aerated chocolate

The stability of aerated chocolate at warm temperature was studied by maintaining the aerated chocolate samples at 45 degrees centigrade and the weight in a fixed volume was measured at determined time points to get the change in their overruns with time. Microscopy images were also taken to compare the morphology change of gas bubbles in the aerated chocolate.

## General manufacturing conditions

## Preparation of chocolate containing emulsifiers

Sucrose stearate (Ryoto S370, S270, S570) with high melting temperatures were thoroughly mixed with a small amount of molten chocolate in roughly around 1:2 weight ratio at warm temperature to produce a slurry which was then diluted with further chocolate up to a total weight of 500g. The concentration of Ryoto S370 in the mixture was ranging from 0.5% to 5% by weight. The mixtures were kept in oven at 65 degrees centigrade for at least one hour before aeration to ensure all the emulsifiers have been dissolved in the chocolate.

For low melting emulsfiers, such as L195 (Tm=22 °C), the determined weight of emulsifier was added to the molten chocolate and well stirred. The mixture was kept in the oven at temperature around 45 °C until the emulsifier has been dissolved.

**Aeration of chocolate**

The aeration was carried out using a Kenwood KMX50 Mixer at different speed (lowest speed1 to highest speed7) for certain time (5 mins to 20 mins) at a temperature of 65 degrees centigrade for sucrose stearates (S270, S370 and S570). The aerated mixtures were kept at warm temperature (40-50 °C) or cooled down to room temperature. For L195, the chocolate mixture with L195 was aerated at temperature from 30 °C to 45 °C.

Whisk method (Krupp hand-whisk) was also applied to aerate chocolate. In the whisking method, the chocolate mixture of 100ml was prepared in a beaker (400ml) in an oven. Maximum speed was used to aerate the chocolate for 5 mins in determined temperature to get aerated chocolate.

**Summary of the Invention**

In a first aspect of the invention, an aerated chocolate composition is provided, the aerated chocolate composition having an overrun of between 40% and 200%, preferably above 50%, more preferably above 60%, containing 1-10%, more preferably 1-5% w/w, of at least one sucrose ester having an HLB value of up to 9. More preferably the HLB value is above 1, even more preferably the HLB is between 3 and 8. Even more preferably the HLB value is between 4 and 8.

80% of the cumulative area weighted size distribution is below 100 $\mu$m, preferably below 90 $\mu$m, more preferably below 80 $\mu$m, most preferably below 60 $\mu$m.

Preferably, 95% of the cumulative area weighted size distribution is below 125 $\mu$m, preferably below 100 $\mu$m.

Preferably, 99% of the cumulative area weighted size distribution is below 150 $\mu$m

Preferably the chocolate composition is substantially anhydrous.

Preferably, the overrun of the aerated chocolate composition is stable. It means that the overrun of the composition does not decrease by more than 20%, preferably 10%, most preferably 5% over a period of 24 hours when the composition is kept at a temperature of at least 40 degrees centigrade. For example when a stable overrun is defined as one which does not decrease by more than 20%, an initial overrun of 200% can only decrease to 180% beyond which the overrun is not stable.

Thus a chocolate composition has now been provided which, on a volume basis, has a lower calorific value than an un-aerated chocolate composition as a proportion of the volume of the aerated chocolate composition comprises a gas.

A further advantage of such a chocolate composition is the different sensorial effect that such a composition has over an un-aerated chocolate composition due to the presence of gas bubbles which burst on the tongue on consumption of the composition.

A particular advantage of the stable chocolate foam composition is that the gas bubbles are not visible to the human eye and thus do not detract from the visible appearance of the chocolate composition. This is particularly important when the composition is used to provide a coating.

Another important advantage is that the overrun is maintained on re-melting. This is important as chocolate compositions are often supplied in a solid form and re-melted just prior to use. This advantage obviates the need for the user to aerate the chocolate composition just prior to use saving on equipment costs and time. Typically, the overrun loss during re-melting is less than 10%.

In a 2nd aspect of the invention, a process for manufacturing the stable chocolate aerated composition is provided, the process comprising the steps of:

(a) Providing the chocolate composition of the first aspect of the invention, wherein the chocolate composition containing the at least one sucrose ester is melted at a temperature of between the melting temperature of the at least one sucrose ester and 30 degrees Celsius, preferably 20 degrees Celsius, more preferably 15 degrees Celsius, most preferably 10 degrees Celsius above the melting temperature of the at least one sucrose ester; then

(b) Mechanically aerating the chocolate composition at a temperature of between 40 degrees Celsius and 30 degrees Celsius, preferably 20 degrees Celsius, more preferably 15 degrees Celsius, most preferably 10 degrees Celsius above the melting temperature of the at least one sucrose ester to a desired overrun thereby to produce a an aerated chocolate composition; and then

(c) Optionally cooling the aerated chocolate composition.

The term "mechanically aerated" excludes aerating means using propellant, such as nitrous oxide. Preferably the chocolate composition is mechanically aerated using a high speed stirrer, a high speed whisk or a homogeniser.

## Detailed Description of the Invention

The present invention will be further described in the following examples.

Examples 1 and 2

Sucrose stearate (Ryoto S370 available from Mitsubishi Chemical Company, Tokyo, Japan (70% sucrose stearate; melting temperature 51 degrees centigrade; and HLB=3)) was thoroughly mixed with 50g chocolate (dark chocolate provided by Barry Callebaut (UK) Limited) at 65 degrees centigrade to produce a slurry which was then diluted with further chocolate up to a total weight of 500g. The concentration of Ryoto S370 in the mixture was 1.5% or 3% by weight. The mixtures were stirred at 65 degrees centigrade for one hour after which aeration was carried out using a Kenwood KMX50 Mixer at maximum speed (speed 7) for five minutes at a temperature of 65 degrees centigrade. The aerated mixtures were then cooled down to room temperature and their overruns measured at room temperature before and after re-melting. It was observed that the overrun was maintained on remelting. The results are summarised in table 1.

Table 1: 1.5% and 3.0% by weight Ryoto S370 (sucrose stearate) in dark chocolate.

| Example | 1 | 2 |
|---|---|---|
| Concentration (% weight) | 3.0 | 1.5 |
| Overrun (%) | 79.0 | 49.0 |
| Re-melting overrun (%) | 78.5 | 49.0 |

The results show that more overrun is achieved at higher concentrations of emulsifier. Furthermore the overrun on remelting is the same as before remelting so the overrun is very stable on remelting.

Examples 3 to 10

500g of each example were prepared and aerated as described hereinabove at the temperatures indicated in table 2 using sucrose stearate (Ryoto S270 (melting temperature 52 degrees centigrade; and HLB=2), S570 (melting temperature 50 degrees centigrade; and HLB=5), all available from Mitsubishi Chemical Company, Tokyo, Japan. The aerated mixtures were cooled down to room temperature and their overruns measured at room temperature before and after re-melting. The results are summarised in table 2.

The results show that chocolate foam compositions may be obtained with satisfactory overruns using a variety of emulsifiers with HLB values ranging from 1 to 9. Furthermore the overrun on remelting is the same as before remelting so the overrun is very stable on remelting.

Table 2: Overrun (%) and remelting overrun (%) of examples comprising a variety of emulsifiers in dark chocolate (emulsifier concentration given as % commercial emulsifier as delivered).

| Example | 3 | 4 | 1 | 5 | 7 | 9 |
|---|---|---|---|---|---|---|
| Emulsifier | S270 | S270 | S370 | S570 | L195 | S570 |
| Aeration temperature (degrees centigrade) | 65 | 65 | 65 | 65 | 40 | 65 |
| Concentration (% weight) | 3 | 5 | 3 | 3 | 3 | 5 |
| Overrun (%) | 54.9 | 89.5 | 79.0 | 70.0 | 63.5 | 136 |
| Remelting overrun (%) | 53.0 | - | 78.5 | 69.0 | 63.6 | |

The normalised area weighted cumulative diameter frequency distribution is summarised in the following table.

| Diameter (um) | 3% S370 | Diameter (um) | 3% S570 | Diameter(um) | 5% S570 |
|---|---|---|---|---|---|
| 0 | 0 | 0 | 0 | 0 | 0 |
| 4.9953 | 0 | 4.99519 | 0.000482 | 4.99529 | 0.000468 |

(continued)

| Diameter (um) | 3% S370 | Diameter (um) | 3% S570 | Diameter(um) | 5% S570 |
|---|---|---|---|---|---|
| 9.99561 | 0.004009 | 9.99538 | 0.009322 | 9.99559 | 0.016842 |
| 14.9959 | 0.020647 | 14.9956 | 0.045128 | 14.9959 | 0.056626 |
| 19.9962 | 0.065584 | 19.9958 | 0.122449 | 19.9962 | 0.109222 |
| 24.9965 | 0.122852 | 24.9959 | 0.181838 | 24.9965 | 0.193747 |
| 29.9968 | 0.252977 | 29.9961 | 0.276003 | 29.9968 | 0.34405 |
| 34.9971 | 0.418755 | 34.9963 | 0.377703 | 34.9971 | 0.502877 |
| 39.9974 | 0.598853 | 39.9965 | 0.467566 | 39.9974 | 0.681838 |
| 44.9977 | 0.721197 | 44.9967 | 0.528101 | 44.9976 | 0.731325 |
| 49.998 | 0.826488 | 49.9969 | 0.585437 | 49.9979 | 0.791714 |
| 54.9983 | 0.904074 | 54.9971 | 0.645425 | 54.9982 | 0.853818 |
| 59.9986 | 0.935786 | 59.9973 | 0.705078 | 59.9985 | 0.900413 |
| 64.9989 | 0.956929 | 64.9975 | 0.733516 | 64.9988 | 0.932199 |
| 69.9992 | 0.965581 | 69.9976 | 0.763598 | 69.9991 | 0.951265 |
| 74.9995 | 0.972739 | 74.9978 | 0.783599 | 74.9994 | 0.961107 |
| 79.9998 | 0.981007 | 79.998 | 0.817659 | 79.9997 | 0.969489 |
| 85.0002 | 0.986448 | 84.9982 | 0.842644 | 85 | 0.97669 |
| 90.0005 | 0.992596 | 89.9984 | 0.868391 | 90.0003 | 0.97986 |
| 95.0008 | 0.99602 | 94.9986 | 0.880791 | 95.0006 | 0.983404 |
| 100.001 | 1 | 99.9988 | 0.894476 | 100.001 | 0.983404 |
| 105.001 | 1 | 104.999 | 0.904914 | 105.001 | 0.98768 |
| 110.002 | 1 | 109.999 | 0.921347 | 110.001 | 0.98768 |
| 115.002 | 1 | 114.999 | 0.927368 | 115.002 | 0.992904 |
| 120.002 | 1 | 120 | 0.933991 | 120.002 | 0.992904 |
| 125.003 | 1 | 125 | 0.948363 | 125.002 | 0.992904 |
| 130.003 | 1 | 130 | 0.948363 | 130.003 | 0.992904 |
| 135.003 | 1 | 135 | 0.957107 | 135.003 | 1 |
| 140.003 | 1 | 140 | 0.957107 | 140.003 | 1 |
| 145.004 | 1 | 145 | 0.966686 | 145.004 | 1 |
| 150.004 | 1 | 150.001 | 0.966686 | 150.004 | 1 |
| 155.004 | 1 | 155.001 | 0.966686 | 155.004 | 1 |
| 160.005 | 1 | 160.001 | 0.966686 | 160.004 | 1 |
| 165.005 | 1 | 165.001 | 0.966686 | 165.005 | 1 |
| | | 170.001 | 0.966686 | 170.005 | 1 |
| | | 265.005 | 1 | | |

Comparative example 11

An additional example comprising 3% by weight Ryoto S370 (sucrose stearate) was prepared as described hereinabove but at a temperature of 55 degrees centigrade (example 11). The aerated mixture was cooled down to room temperature and its overrun measured. The result is given in table 3 and shows that chocolate foam compositions may be obtained using Ryoto S370 with satisfactory overruns at various aeration temperatures.

Table 3: Examples comprising 3% by weight Ryoto S370 (sucrose stearate) prepared at different temperatures.

| Example | 11 | 1 |
|---|---|---|
| Aeration temperature (degrees centigrade) | 55 | 65 |
| Overrun (%) | 39.2 | 79.0 |

Example 12

An additional example comprising 3% by weight Ryoto S970 (sucrose stearate) was prepared as described hereinabove but at a temperature of 70 degrees centigrade (example 12). The aerated mixture was cooled down to room temperature and its overrun measured at room temperature before and after re-melting. The results are summarised in table 4 and replicate the conclusions for example 11 but with a different emulsifier. Furthermore the overrun on remelting is the same as before remelting so the overrun is very stable on remelting.

Table 4: Examples comprising 3% by weight Ryoto S970 (sucrose stearate) prepared at different temperatures.

| Example | 6 (comparative) | 12 |
|---|---|---|
| Aeration temperature (degrees centigrade) | 65 | 70 |
| Overrun (%) | 35.0 | 60.0 |
| Remelting overrun (%) | 34.1 | 57.0 |

Example 17

An additional example comprising 3% by weight Ryoto S370 (sucrose stearate) was prepared as described for example 1 hereinabove but using a hand whisk (Krupp) instead of a Kenwood KMX50 Mixer at maximum speed (example 17). The aerated mixture was cooled down to room temperature and its overrun measured. The results are summarised in table 7 and show that the mixer is more effective at whipping air into the chocolate composition than a hand whisk.

Table 7: Examples comprising 3% by weight Ryoto S370 (sucrose stearate) prepared using alternatively a whisk or a Kenwood KMX50 Mixer at maximum speed.

| Example | 17 | 1 |
|---|---|---|
| Aeration means | Whisk | Mixer |
| Overrun (%) | 43.0 | 79.0 |

Examples 18 to 21

Additional examples comprising 3% by weight Ryoto S370 (sucrose stearate) were prepared as described for example 1 but at mixer speeds of 1 (example 18, not part of the invention) 3 (example 19), 4 (example 20) and 5 (example 21). The aerated mixtures were cooled down to room temperature and their overruns measured. The results are summarised in table 8 and show that the effectiveness of the mixer at whipping air into the chocolate composition is dependent on the mixer speed.

Table 8: Examples comprising 3% by weight Ryoto S370 (sucrose stearate) prepared at different mixer speeds.

| Example | 18 (comparative) | 19 | 20 | 21 | 1 |
|---|---|---|---|---|---|
| Mixer speed | 1 | 3 | 4 | 5 | 7 |
| Overrun (%) | 20.3 | 106.3 | 107.1 | 94.4 | 79.0 |

Examples 22 to 26

Additional examples comprising 3% by weight Ryoto S370 (sucrose stearate) were prepared as described for example 1 and stored at 45 degrees centigrade (ie in the liquid state) for 1 (example 22), 2 (example 23), 4 (example 24), 6 (example 25) and 72 (example 26) hours after which the aerated mixtures were cooled down to room temperature and their overruns measured. The results are summarised in table 9 and show that the chocolate foam compositions are stable for days.

Table 9: Examples comprising 3% by weight Ryoto S370 (sucrose stearate) after storage at 45 degrees centigrade.

| Example | 1 | 22 | 23 | 24 | 25 | 26 |
|---|---|---|---|---|---|---|
| Storage time (hours) | 0 | 1 | 2 | 4 | 6 | 96 |
| Overrun (%) | 79.0 | 79.0 | 74.0 | 74.0 | 74.0 | 72.0 |

<u>Examples 27 to 28 (comparative)</u>

Examples where prepared in accordance with the method set forth for example 1 comprising 3% by weight Ryoto S1170 (sucrose stearate; melting temperature 49 degrees centigrade; and HLB=11)) (example 27) and Ryoto S1670 (sucrose stearate; melting temperature 49 degrees centigrade; and HLB=16)) (example 28) after which the aerated mixtures were cooled down to room temperature and their overruns measured. The results are summarised in table 10 and show that aeration is not possible with sucrose ester emulsifiers of HLB greater than 9. The very low level of overrun obtained for example 28 was not stable and in the form of very large bubbles and thus of a rather different in nature to the overruns of the chocolate foam compositions of the invention.

Table 10: Examples (comparative) comprising 3% by weight Ryoto S1170 or S1670 (sucrose stearate) in dark chocolate.

| Example | 27 | 28 |
|---|---|---|
| Emulsifier | S1170 | S1670 |
| Overrun (%) | 0.0 | 4.8 |

<u>Example 29</u>

500g of an example was prepared as described for example 1 using 3% by weight Ryoto S370 (sucrose stearate (melting temperature 51 degrees centigrade; and HLB=3)). The aerated mixture was cooled down to room temperature and its overrun measured as 79.0%.

A sample was then prepared for scanning electron microscopy by cooling it immediately after preparation to 50 degrees centigrade and placing it on a 10mm diameter aluminium sample holder drilled with a 5mm diameter depression. The sample holder was then immediately plunged into nitrogen slush, transferred to a Gatan Alto 2500 low temperature preparation chamber and warmed to -90 degrees centigrade for fracture and coating with 2nm Au/Pd. The coated sample was then transferred to a Jeol 6301F field emission scanning electron microscope fitted with a Gatan cold stage and examined at -150 degrees centigrade. Images were obtained at 5kV at magnifications of x100 and x300 at 5kV. From the images showing air bubbles, image analysis was undertaken using Matlab software to obtain a number-based size distribution for the air bubbles. The number-average size (diameter) was 20.8 microns which is well below the size visible to the naked eye. In fact the vast majority of the air bubbles, if not all the air bubbles, are not visible to the naked eye.

<u>Example 30</u>

500g of an example was prepared as described for example 1 using 1.5% by weight Ryoto S370 (sucrose stearate (melting temperature 51 degrees centigrade; and HLB=3)). The aerated mixture was cooled down to room temperature and its overrun measured as 50.0%.

A sample was then prepared for scanning electron microscopy and images obtained in the same manner as set forth in example 29. From these images, image analysis was undertaken using Matlab software to obtain a number-based size distribution for the air bubbles. The number-average size (diameter) was 24.2 microns which is well below the size visible to the naked eye. In fact the vast majority of the air bubbles, if not all the air bubbles, are not visible to the naked eye. Thus the number-average size of the air bubbles is not significantly affected by halving the amount of emulsifier from 3% by weight to 1.5% by weight of the chocolate composition.

<u>Example 31</u>

A sample of example 29 was stored at -20 degrees centigrade for one month and remelted and placed on a glass slide with a 200 micron thick spacer separating the slide from a cover slip. An optical image was taken on a Polyvar microscope (Reichert-Jung Limited) at room temperature but whilst the sample was still liquid. The air bubbles are of a size which is non-visible to the naked eye. Thus the air bubbles size is maintained at dimensions non-visible to the naked eye after one month of storage.

<u>Example 32</u>

On preparation of example 29, a sample was cooled to and stored at 45 degrees centigrade (ie in the liquid state) and optical images taken using the method set forth in example 31 after 1, 2, 6 and 96 hours of storage. The images show the air bubbles are of a size which is non-visible to the naked eye. Thus the air bubble size is maintained at dimensions non-visible to the naked eye after 96 hours of storage at 45 degrees centigrade.

Examples 33 to 35

500g examples were prepared as described for example 1 using 3% by weight Ryoto S370 (sucrose stearate (melting temperature 51 degrees centigrade; and HLB=3)) but using white chocolate (example 33), milk chocolate (example 34) and couverture chocolate (example 35) (all available from Barry Callebaut (UK) Limited) in place of the dark chocolate provided by Barry-Callebaut Limited. The aerated mixtures were cooled down to room temperature and their overruns measured at room temperature before and after remelting. The inital and remelting overruns for each example are set forth

in table 11 and show that chocolate foam compositions with satisfactory overruns may be obtained with different types of chocolate when used with Ryoto S370. Furthermore the overrun on remelting is the same as before remelting so the overrun is very stable on remelting.

Table 11: Examples comprising 3% by weight Ryoto S370 (sucrose stearate) in milk, white and couverture chocolates.

| Example | 33 | 34 | 35 |
|---|---|---|---|
| Chocolate type | White | Milk | Couverture |
| Overrun (%) | 70.8 | 69.0 | 87.0 |
| Remelt overrun (%) | 70.0 | 68.0 | 85.0 |

Optical micrographs were taken using the method set forth in example 31 of respectively examples 33, 34 and 35. The figures show the air bubbles which by comparison with the 200 micron marker are of a size which is non-visible to the naked eye. Thus the invention works for a variety of different types of chocolate.

**Claims**

1.  An aerated chocolate composition having an overrun of between 40% and 200%, preferably greater than 50%, more preferably greater than 60% , the aerated chocolate composition contains 1-10%, more preferably 1-5% w/w, of at least one sucrose ester having an HLB value of below 9, wherein 80% of the cumulative area weighted size distribution is below 100 $\mu$m, preferably below 90 $\mu$m, more preferably below 80 $\mu$m, most preferably below 60 $\mu$m.

2.  An aerated chocolate composition according to claim 1 wherein the HLB value is above 1.

3.  An aerated chocolate composition according to claim 2 wherein the HLB value is between 3 and 8, preferably between 4 and 8.

4.  An aerated chocolate composition according to claims 1 to 3 wherein 95% of the cumulative area weighted size distribution is below 125 $\mu$m, preferably below 100 $\mu$m.

5.  An aerated chocolate composition according to claim 4 wherein 99% of the cumulative area weighted size distribution is below 150 $\mu$m.

6.  A process for manufacturing an aerated chocolate composition according to any preceding claim comprising the steps of:

    a. Providing a chocolate composition, wherein the chocolate composition containing the at least one sucrose ester is melted at a temperature of between the melting temperature of the at least one sucrose ester and 20 degrees Celsius, preferably 15 degrees Celsius, more preferably 10 degrees Celsius above the melting temperature of the at least one sucrose ester; then
    b. Mechanically aerating the chocolate composition at a temperature of at least 40 degrees centigrade and above the melting temperature of the at least one sucrose ester to a desired overrun thereby to produce an aerated chocolate composition; and then
    c. Optionally cooling the aerated chocolate composition.

**Patentansprüche**

1. Mit Luft durchsetzte Schokoladenzusammensetzung mit einem Overrun von 40 bis 200 %, vorzugsweise mehr als 50 %, stärker bevorzugt mehr als 60 %,

   wobei die mit Luft durchsetzte Schokoladenzusammensetzung 1 bis 10, stärker bevorzugt 1 bis 5 Gew.-% von zumindest einem Saccharoseester mit einem HLB-Wert von weniger als 9 enthält, wobei 80 % der kumulierten flächengewichteten Größenverteilung unter 100 $\mu$m, vorzugsweise unter 90 $\mu$m, stärker bevorzugt unter 80 $\mu$m, besonders bevorzugt unter 60 $\mu$m liegen.

2. Mit Luft durchsetzte Schokoladenzusammensetzung nach Anspruch 1,
   wobei der HLB-Wert mehr als 1 beträgt.

3. Mit Luft durchsetzte Schokoladenzusammensetzung nach Anspruch 2,
   wobei der HLB-Wert zwischen 3 und 8, vorzugsweise zwischen 4 und 8 liegt.

4. Mit Luft durchsetzte Schokoladenzusammensetzung nach den Ansprüchen 1 bis 3, wobei 95 % der kumulierten flächengewichteten Größenverteilung unter 125 $\mu$m, vorzugsweise unter 100 $\mu$m liegen.

5. Mit Luft durchsetzte Schokoladenzusammensetzung nach Anspruch 4,
   wobei 99 % der kumulierten flächengewichteten Größenverteilung unter 150 $\mu$m liegen.

6. Verfahren zum Herstellen einer mit Luft durchsetzten Schokoladenzusammensetzung nach einem der vorstehenden Ansprüche, das die folgenden Schritte aufweist:

   a. Bereitstellen einer Schokoladenzusammensetzung, wobei die Schokoladenzusammensetzung, die den zumindest einen Saccharoseester enthält, bei einer Temperatur zwischen der Schmelztemperatur des zumindest einen Saccharoseesters und 20 °C, vorzugsweise 15 °C, stärker bevorzugt 10 °C über der Schmelztemperatur des zumindest einen Saccharoseesters geschmolzen wird; anschließend
   b. mechanisches Durchlüften der Schokoladenzusammensetzung bei einer Temperatur von mindestens 40 °C und oberhalb der Schmelztemperatur des zumindest einen Saccharoseesters bis zum gewünschten Overrun, wodurch eine mit Luft durchsetzte Schokoladenzusammensetzung erzeugt wird; und anschließend
   c. gegebenenfalls Abkühlen der mit Luft durchsetzten Schokoladenzusammensetzung.

**Revendications**

1. Composition de chocolat aérée présentant un dépassement de 40 % à 200 %, de préférence supérieur à 50 %, encore mieux supérieur à 60 %, la composition de chocolat aérée contient 1-10 %, encore mieux 1-5 % en poids/poids, d'au moins un ester de saccharose présentant une valeur HLB inférieure à 9, dans laquelle 80 % de la distribution de taille pondérée par la surface cumulée sont inférieurs à 100 $\mu$m, de préférence inférieurs à 90 $\mu$m, bien mieux encore inférieurs à 80 $\mu$m, bien mieux encore inférieurs à 60 $\mu$m.

2. Composition de chocolat aérée selon la revendication 1, dans laquelle la valeur HLB est supérieure à 1.

3. Composition de chocolat aérée selon la revendication 2, dans laquelle la valeur HLB est de 3 à 8, de préférence de 4 à 8.

4. Composition de chocolat aérée selon les revendications 1 à 3, dans laquelle 95 % de la distribution de taille pondérée par la surface cumulée sont inférieurs à 125 $\mu$m, de préférence inférieurs à 100 $\mu$m.

5. Composition de chocolat aérée selon la revendication 4, dans laquelle 99 % de la distribution de taille pondérée par la surface cumulée sont inférieurs à 150 $\mu$m.

6. Procédé de fabrication d'une composition de chocolat aérée selon l'une quelconque des revendications précédentes comprenant les étapes consistant :

   a. à fournir une composition de chocolat, où la composition de chocolat contenant le au moins un ester de saccharose est fondue à une température allant de la température de fusion du au moins un ester de saccharose à 20 degrés Celsius, de préférence 15 degrés Celsius, encore mieux 10 degrés Celsius au-dessus de la température de fusion du au moins un ester de saccharose ; puis

b. à aérer mécaniquement la composition de chocolat à une température d'au moins 40 degrés centigrade et au-dessus de la température de fusion du au moins un ester de saccharose jusqu'à un dépassement souhaité pour produire par-là une composition de chocolat aérée ; et ensuite

c. à refroidir éventuellement la composition de chocolat aérée.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1166639 A1

- JP 6087742 B